# EUROPEAN PATENT APPLICATION

(11) **EP 1 365 561 A1**
(43) Date of publication of application: **26.11.2003**
(21) Application number: 03010288.3
(22) Date of filing: 07.05.2003
(51) Int. Cl.: H04L 29/08, H04L 12/46, H04L 29/06

(54) **Proximity network encryption and setup**

(30) Priority: 09.05.2002 US 142114
(71) Applicant: Gateway, Inc., Poway, California 92064 (US)
(72) Inventor: Rector, Dusty D., Southlake, TX 76092 (US); Sullivan, Gary E., Trabuco Canyon, CA 92679 (US)
(74) Representative: Viering, Jentschura & Partner

(57) **Abstract**

Systems and methods provide configuration and setup data for a network device receives configuration data for a first network. When a new network device is to be added to the network, the new device is brought within a proximity boundary to a proximity set component. The proximity set component establishes a connection with the new network using a second network connection. Configuration data for the first network is sent to the new network device over the second network. The new network device can then communicate over the first network. In one embodiment, the proximity setup component is integrated with a gateway component such as a router or wireless access point.

## Description

### Field

The present invention relates to networks and in particular to setup of network elements on a network.

### Background

Computer networks, once found only in large companies, are now commonly found in all sorts and sizes of companies. In addition, more and more people have more than one computing device in their home, and are setting up networks within their home in order to allow their computers to communicate with one another. An example of such a network configuration is a desktop or tower personal computer that remains in the home and a laptop computer that is used both at home and at the office. When at the office, the computer can be connected to the office network, and when at home to the home network.

In addition to the more traditional computer devices such as desktop, tower, laptop computers and personal digital assistants (PDAs), new devices are being developed that can be attached to networks. For example, audio devices can be connected to the network that receive audio files from a source in the network and play them through a loudspeaker.

Various types of networks can be used to connect the above-mentioned devices, including both wired and wireless networks. In the case of wireless networks, a common standard used is the IEEE 802.11 family of standards, and in particular, the 802.11b standard. The 802.11b standard defines a communication protocol for wireless networks that provides a mechanism for encrypting communications between devices so that an outside party cannot "eavesdrop" on the communications as they are broadcast from one device to another.

In order for devices to communicate on a wireless network, the devices must be configured with the correct communications parameters. These parameters include the Service Set Identifier (SSID, also known as the "network name"), communications channel, and in the case of encrypted communications, the encryption key must also be specified when adding a device to a network. For some network computing devices, a user interface exists allowing a user to enter the correct parameters when adding the device. However, for many of the low-cost, special purpose devices such as the network audio device described above, the user interface is non-existent or difficult to use. In order to remedy this problem, some systems have provided a mechanism in which the required communications parameters are sent over the network from a previously configured device to the device to be added. However, this has the disadvantage that while the configuration parameters are being sent to the new device, encryption must be disabled so that the new device can receive the parameters correctly. During this period, network communications are vulnerable to being intercepted by outside parties.

In view of the above, there is a need in the art for a way to easily configure new network devices without compromising the security of the network.

### Summary

Systems and methods provide configuration and setup data for a network device receives configuration data for a first network. When a new network device is to be added to the network, the new device is brought within a proximity boundary to a proximity setup component. The proximity setup component establishes a connection with the new network using a second network connection. Configuration data for the first network is sent to the new network device over the second network. The new network device can then communicate over the first network. In one embodiment, the proximity setup component is integrated with a gateway component such as a router or wireless access point.

The system provides advantages over previous systems. The new network device does not require a user interface in order to receive configuration data for the first network. Additionally, the security of the first network is not compromised, because there is no need to disable encryption to add the new network device.

### Brief Description of the Drawings

- Figure 1A: is a block diagram of a computer system according to an embodiment of the invention that performs a method of automatically providing a configuration setup to a network device.
- Figure 1B: is a block diagram of a computer system according to an alternative embodiment of the invention that performs a method of automatically providing a configuration setup to a network device.
- Figure 2: is a block diagram of a computer system according to an embodiment of the invention that illustrates adding a new device to the network.
- Figure 3: is a block diagram of a computer system according to an embodiment of the invention that illustrates the system after the new device has been added.
- Figure 4: is a flowchart illustrating a method according to an embodiment of the invention for adding a new device to a network.

### Detailed Description

In the following description, reference is made to the accompanying drawings which form a part hereof, and in which is shown by way of illustration specific embodiments in which the invention may be practiced. These embodiments are described in sufficient detail to enable those skilled in the art to practice the invention, and it is to be understood that other embodiments may be utilized and that structural, logical and electrical changes may be made without departing from the scope of the present invention. The following description is, therefore, not to be taken in a limited sense, and the scope of the present invention is defined by the appended claims.

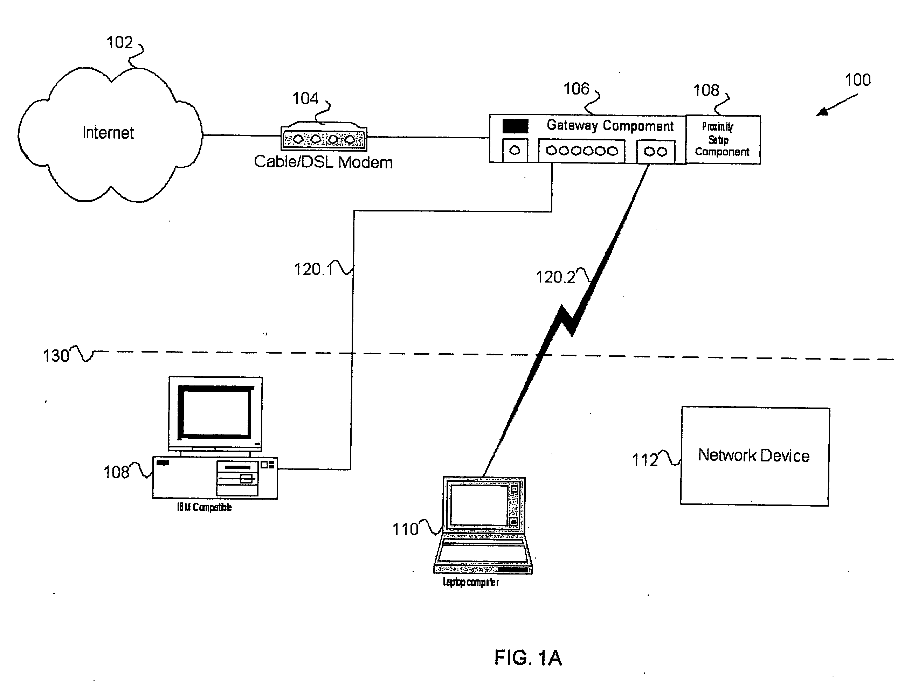

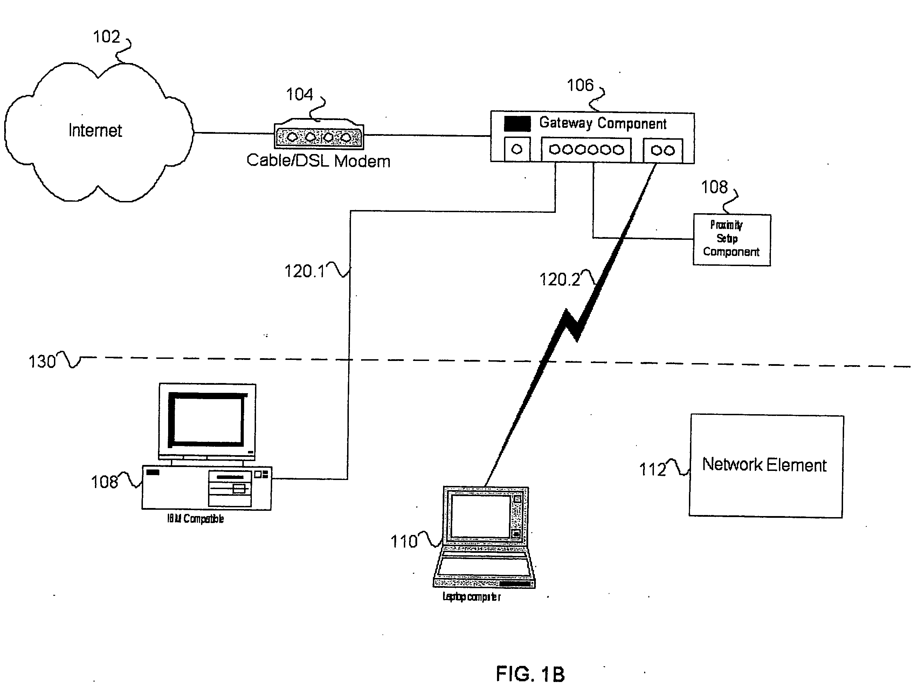

Figure 1 is a block diagram of a system 100 incorporating embodiments of the invention that provide setup and configuration information to a device 112 that is to be added to a network 120. System 100 comprises a gateway component 106 and a proximity setup component 108. Typically, gateway 106 will be connected to an external network such as the Internet 102 using a modem 104. Modem 104 can be a standard phone line modem, a cable modem, a DSL modem, or any other device capable of connecting to an external network 102.

Gateway component 106 sends and receives data to and from devices on the local network 120 and, when necessary, routes data to external network 102. Gateway component can be any type of network data communications device, including a switch, hub, router, wireless access point, or residential gateway. The invention is not limited to any particular type of data communications device. Gateway component 106 typically supports wired network connections 120.1, or wireless network connections 120.2. In some embodiments, gateway component 106 supports both wireless and wired connections as exemplified by the wired connection 120.1 to desktop PC 108 and the wireless connection 120.2 to laptop PC 110. However, it should be noted that the invention is not limited in any way by the type of network connection, number of devices connected to gateway component 106, or type of device connected to the gateway component 106 via network 120.

In some embodiments, wireless connection 120.2 is a connection supporting the IEEE 802.11b protocol with encryption enabled. In these embodiments, devices connecting to gateway component 106 must be configured with communications parameters to enable the devices communicate over network 120. In some embodiments, these parameters include the service set ID (SSID, also referred to as "network name"), the channel number used by gateway component 106, and the encryption key used to encrypt network data transmitted over the connection. The service set ID is used to identify a particular wireless network, and is useful when there are multiple wireless networks supported within a domain. The channel number is used to identify the frequency used by devices on a wireless network, and is used to prevent interference from other wireless network devices used by other parties. The above-described parameters are exemplary; the invention is not limited to any particular set of communications parameters.

Proximity setup component 108 comprises hardware and software that provides network configuration information such as the parameters described above to devices that are being added to network 120. Proximity setup component 108 includes a network interface for establishing connections on a network that is separate from network 120. In one embodiment, proximity setup component 108 includes an infra-red (IR) network interface. In an alternative embodiment, proximity setup component 108 includes a radio frequency (RF) network interface. In further alternative embodiments, proximity setup component provides a wired network interface. The invention is not limited to any particular type or combination of network interfaces.

The network interface for proximity setup component 108 is typically chosen to have a limited range, illustrated by proximity boundary line 130. As will be appreciated by those of skill in the art, the proximity boundary will be determined by the type of network interface included in proximity setup component 108. For example, in the case of a wired network interface, the proximity boundary will be the wire itself, that is, devices connected to the wire will be in proximity, those not connected will not be in proximity. For RF wireless networks, the proximity boundary will be the range in which the RF signals can be successfully received and transmitted. For IR wireless networks, the proximity boundary will be defined by the area where a network device can be within the "line of sight" of the IR transmitter/receiver of proximity setup component 108. It is desirable for proximity setup component 108 to include an IR network interface, because the proximity boundary will typically be limited to the room in which the proximity setup component 108 resides, with the walls of the room blocking any transmission of IR signals beyond the room.

Figure 1B illustrates a system incorporating alternative embodiments of the invention that provide setup and configuration information to a network device 112 that is to be added to a network 120. In these embodiments, proximity setup component 108 is physically separate from gateway component 106. Proximity setup component communicates with gateway component 106 through a network such as network 120. Figure 1B illustrates the connection as a wired connection, however the connection can also be wireless. In all other respects, proximity setup component operates in the same way regardless of whether it is physically integrated with gateway component 106 or whether it is separate.

Returning to Figure 1A, network device 112 represents a device that is to be added to network 120. In one embodiment, network device 112 comprises an audio device that receives data over a network and plays the audio data through loudspeakers. An example of such a device is the Gateway Connected Music Player available from Gateway, Inc. Another example is a touch pad device such as the Gateway Connected Touch Pad, also available from Gateway, Inc. Further examples of network devices include cell phones, PDAs, security systems, alarm clocks, coffeemakers, sprinkler systems, furnaces, and other appliances, the invention is not limited to any particular type of network device.

As shown in Figures 1A and 1B, network device 112 is beyond proximity boundary line 130, and is therefore unable to communicate with proximity setup component 108. Furthermore, network device 112 has not received the communications parameters necessary to enable it to communicate over network 120.

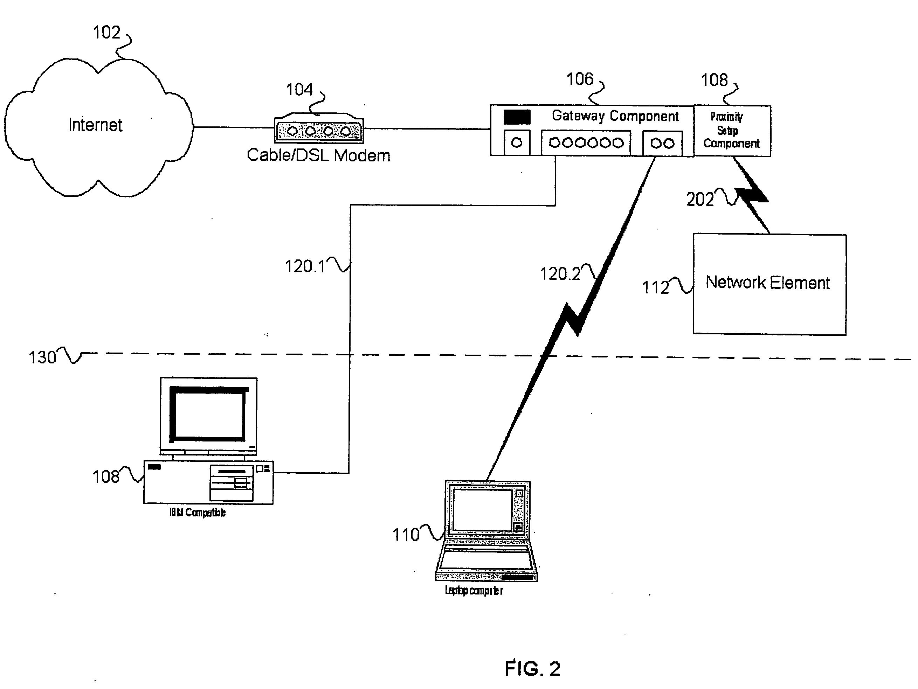

Figure 2 illustrates the operation of the system when network device 112 is brought within proximity boundary 130. Proximity setup component 108 detects the presence of network device 112. In one embodiment, Bluetooth technology is used by proximity setup component 108 and network device 112 in order to determine that the network device is in proximity to setup component 108. Upon detecting that network device 112 is in proximity, proximity setup component 108 establishes a network connection 202 with network device 112. Network connection 202 can be a wireless connection, as illustrated, or it can be a wired connection. As discussed above, it is desirable for network connection 202 to be an infra-red wireless connection. However, the invention is not limited to any particular type of connection.

Once a connection 202 has been established, proximity setup component 108 can provide configuration and setup data to network element 112. As discussed above, this data includes the SSID, wireless channel, and encryption keys necessary to allow network device 112 to communicate on network 120.

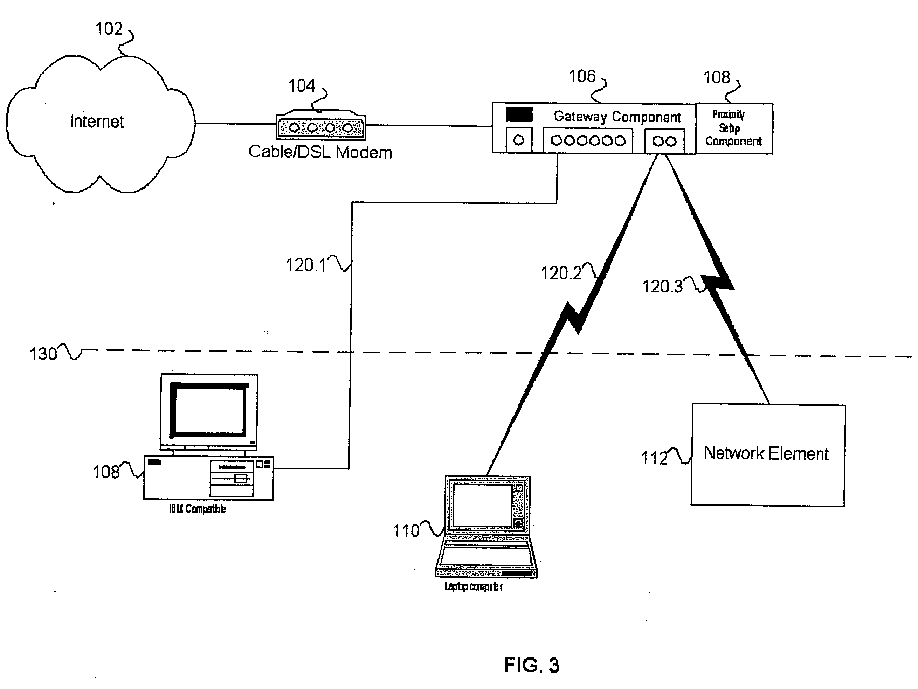

Figure 3 illustrates the operation of the system after network device 112 has received configuration and setup information from proximity setup component 108. Network device 112 has been moved to its desired location, in the exemplary system network device 112 has been moved beyond proximity boundary 130. Network device 112 now has the required information to establish a connection 120.3 with gateway component 106 allowing network device 112 to communicate with any device on network 120.

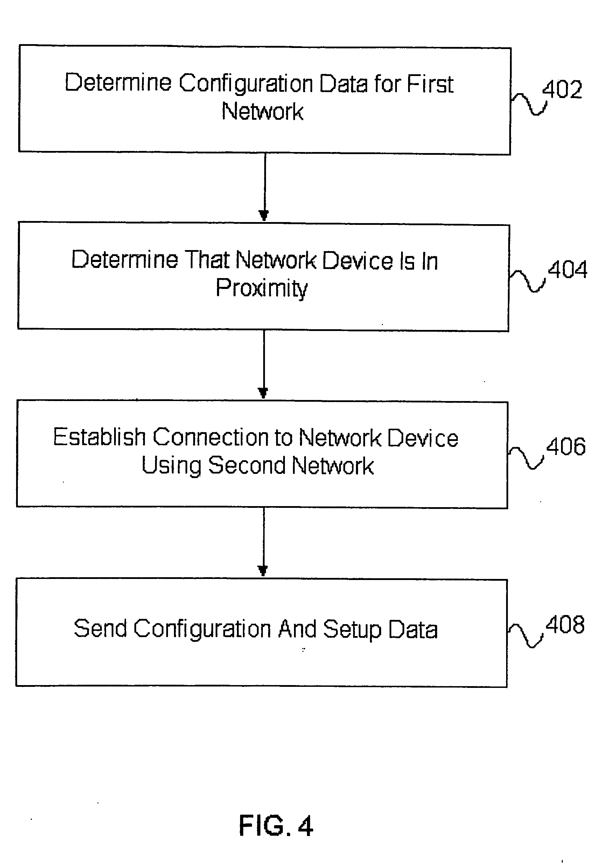

A flowchart describing a computerized method to provide configuration and setup data is provided in Figure 4. The computerized method is desirably realized at least in part as one or more programs running on a computer -- that is, as a program executed from a computer-readable medium such as a memory by a processor of a computer. The programs are desirably storable on a computer-readable medium such as ROM, RAM, a floppy disk or a CD-ROM, for distribution and installation and execution on another (suitably equipped) computer. The term "computer readable medium" is also used to represent carrier waves on which software is transmitted. Thus, in one embodiment, a computer program module is executed by a processor of a computer from a medium to provide configuration and setup information to a network device.

The method begins by determining configuration data for a first network (block 402). The invention is not limited to any particular mechanism for determining the configuration data. In some embodiments, the configuration data is read from a gateway component. The configuration data can be read directly from the gateway component's RAM, ROM, or other media. In alternative embodiments, the configuration data can be provided over a network. In further alternative embodiments, the configuration data can be provided by a user interface.

Next, a system executing the method determines that a network device is in proximity (block 404). In one embodiment, Bluetooth mechanisms are used to determine proximity. However, those of skill in the art will appreciate that other proximity detection mechanisms are possible and within the scope of the invention.

Upon detecting proximity of a network device, a system executing the method establishes communications with the network device using a second network separate from the first network (block 406). In some embodiments, the second network connection is a wired connection. In alternative embodiments, the second network connection is a wireless connection. It is desirable that an IR network connection be established in order to limit the range of the transmissions to those within the line of sight of the system executing the method.

Next, configuration data for the first network is sent over the second network to the network device (block 408). In some embodiments, this configuration data includes an SSID, channel, and encryption key for the first network. Those of skill in the art will appreciate that other configuration data can be sent. In some embodiments, the configuration data is sufficient to allow the network device to begin communications using the first network.

A proximity detection and configuration setup system has been described. Although specific embodiments have been illustrated and described herein, it will be appreciated by those of ordinary skill in the art that any arrangement that is calculated to achieve the same purpose may be substituted for the specific embodiments shown. This application is intended to cover any adaptations or variations of the present invention. Therefore, it is manifestly intended that this invention be limited only by the following claims and equivalents thereof.

## Claims

1. A computerized system for providing a network configuration comprising:
a gateway component operable for communicably coupling at least one network device using a first network protocol;
a proximity setup component operable for communicably coupling to a second network device using a second network protocol, wherein the proximity setup component is operable to provide communications parameters for the first network protocol to the second network device.

2. The computerized system of claim 1, wherein the second network protocol is a wireless protocol

3. The computerized system of claim 1, wherein the second network protocol is an infra-red (IR) network protocol.

4. The computerized system of claim 2, wherein the second network protocol is the radio frequency (RF) protocol.

5. The computerized system of claim 4, wherein the second network protocol is the Bluetooth protocol.

6. The computerized system of claim 1, wherein the second network protocol is a wired protocol.

7. The computerized system of claim 1, wherein the first network protocol is the IEEE 802.11b protocol.

8. The computerized system of claim 1, wherein the gateway component is a wireless access point.

9. The computerized system of claim 1, wherein the gateway component is a router.

10. The computerized system of claim 1, wherein the gateway component is a residential gateway.

11. The computerized system of claim 1, wherein the gateway component is a personal computer.

12. The computerized system of claim 1, wherein the proximity setup component is integrated with the gateway component.

13. The computerized system of claim 1, wherein the proximity setup component is separated from the gateway component and communicably coupled to the gateway component using the first network protocol.

14. A method for configuring a network device, the method comprising:
determining a set of network parameters for a first network protocol;
determining that the network device is proximate; and
sending the set of network parameters to the network device utilizing a second network protocol.

15. The method of claim14, wherein the set of network parameters includes network parameters selected from the group consisting of SSID, channel ID, and encryption key.

16. The method of claim 14, wherein determining that the network device is proximate includes establishing a wired connection to the network device.

17. The method of claim 14, wherein determining that the network device is proximate includes establishing a wireless connection to the network device.

18. The method of claim 17, wherein the wireless connection is an infra-red (IR) connection.

19. The method of claim 17, wherein the wireless connection is a radio frequency (RF) connection.

20. The method of claim 17, wherein the wireless connection uses a Bluetooth protocol.

21. A method for configuring a network device, the method comprising:
bringing the network device in proximity to a proximity setup component; and
receiving from the proximity setup component by a first network protocol a set of network parameters for a second network protocol.

22. The method of claim 21, wherein the set of network parameters includes network parameters selected from the group consisting of SSID, channel ID, and encryption key.

23. The method of claim 21, wherein bringing the network device in proximity to a proximity setup component includes establishing a wired connection between the network device and the proximity setup component.

24. The method of claim 21, wherein bringing the network device in proximity to a proximity setup component includes establishing a wireless connection between the network device and the proximity setup component.

25. The method of claim 24, wherein the wireless connection is an infra-red (IR) connection.

26. The method of claim 24, wherein the wireless connection is a radio frequency (RF) connection.

27. The method of claim 24, wherein the wireless connection uses a Bluetooth protocol.
[Computer-readable medium]

28. A computer-readable medium having computer executable instructions for performing a method for configuring a network device, the method comprising:
determining a set of network parameters for a first network protocol;
determining that the network device is proximate; and
sending the set of network parameters to the network device utilizing a second network protocol.

29. The computer readable medium of claim 28, wherein the set of network parameters includes network parameters selected from the group consisting of SSID, channel ID, and encryption key.

30. The computer readable medium of claim 28, wherein determining that the network device is proximate includes establishing a wired connection to the network device.

31. The computer readable medium of claim 28, wherein determining that the network device is proximate includes establishing a wireless connection to the network device.

32. The computer readable medium of claim 31, wherein the wireless connection is an infra-red (IR) connection.

33. The computer readable medium of claim 31, wherein the wireless connection is a radio frequency (RF) connection.

34. The computer readable medium of claim 31, wherein the wireless connection uses a Bluetooth protocol.

35. A computer-readable medium having computer executable instructions for performing a method for configuring a network device, the method comprising:
bringing the network device in proximity to a proximity setup component; and
receiving from the proximity setup component by a first network protocol a set of network parameters for a second network protocol.

36. The computer readable medium of claim 35, wherein the set of network parameters includes network parameters selected from the group consisting of SSID, channel ID, and encryption key.

37. The computer readable medium of claim 35, wherein bringing the network device in proximity to a proximity setup component includes establishing a wired connection between the network device and the proximity setup component.

38. The computer readable medium of claim 35, wherein bringing the network device in proximity to a proximity setup component includes establishing a wireless connection between the network device and the proximity setup component.

39. The computer readable medium of claim 38, wherein the wireless connection is an infra-red (IR) connection.

40. The computer readable medium of claim 38, wherein the wireless connection is a radio frequency (RF) connection.

41. The computer readable medium of claim 38, wherein the wireless connection uses a Bluetooth protocol.
